Europäisches Patentamt
European Patent Office
Office européen des brevets

(19)

(11) Veröffentlichungsnummer: **0 216 289 A1**

# EUROPÄISCHE PATENTANMELDUNG

(12)

(21) Anmeldenummer: 86112753.8

(51) Int. Cl.⁴: **H01B 1/12**

(22) Anmeldetag: 16.09.86

(30) Priorität: 27.09.85 DE 3534415

(43) Veröffentlichungstag der Anmeldung: 01.04.87 Patentblatt 87/14

(84) Benannte Vertragsstaaten: CH DE FR GB IT LI

(71) Anmelder: **BAYER AG**
**Konzernverwaltung RP Patentabteilung**
**D-5090 Leverkusen 1 Bayerwerk(DE)**

(72) Erfinder: **Lange, Walter, Dr.**
**Neusser Strasse 321**
**D-5000 Köln 60(DE)**
Erfinder: **Hocker, Jürgen, Dr.**
**Eichenweg 6**
**D-5060 Bergisch-Gladbach 2(DE)**

## (54) Poly-N-Acyl-pyrrole und Verfahren zu ihrer Herstellung.

(57) Elektrisch leitfähige Poly-N-acylpyrrole, die gute mechanische Eigenschaften und eine hohe Stabilität aufweisen und ein Verfahren zu ihrer Herstellung durch anodische Polymerisation von N-Acylpyrrolen in einem polaren Lösungsmittel in Gegenwart geeigneter Leitsalze.

EP 0 216 289 A1

## Poly-N-Acyl-pyrrole und Verfahren zu ihrer Herstellung

Die Erfindung betrifft elektrisch leitfähige Poly-N-acyl-pyrrole und ihre Herstellung durch elektrochemische Polymerisation von N-Acyl-pyrrolen in Gegenwart schwer oxidierbarer Leitsalze.

T. Ciusa, Gazz. chim. ital. 1925, 55, 385, beschrieb die Pyrolyse von Tetrajodpyrrol, die zu einer graphitähnlichen Substanz führte und von D.E. Weiss et al. nochmals eingehend untersucht wurde (Austr. J. Chem. 1963, 16, 1056, 1076, 1096). Es entstanden elektrisch leitfähige Pulver mit Leitfähigkeiten bis zu $10^{-1}$ $\Omega^{-1}$ $cm^{-1}$. Die gute Leitfähigkeit ist auf eine Komplexbildung zwischen dem unlöslichen Polypyrrol und Jod zurückzuführen.

Nach DE-OS 3 224 157 erhält man durch oxidative Polymerisation von z.B. Pyrrol mit $NO^+$ oder $NO_2^+$ ebenfalls gut leitfähige Polymere.

In der US-Patentschrift 3 574 072 ist die elektrochemische Polymerisation von 5-Ring-Heterocyclen (u.a. Pyrrol) beschrieben.

Durch Arbeiten von A.F. Diaz et al., J. Chem. Soc. Chem. Comm. 1979, 635, 854; ACS Org. Coat. Plast. Chem. 1980, 43; ist die anodische Polymerisation von Pyrrol in Gegenwart von Leitsalzen bekannt; es werden filmartige Materialien mit elektrischen Leitfähigkeiten bis $10^2\Omega^{-1}$ $cm^{-1}$ erhalten. Bei diesen filmartigen Materialien handelt es sich um partiell oxidierte Polypyrrole, die bevorzugt Gegenionen wie $BF_4^\ominus$, $AsF_6^\ominus$, $ClO_4^\ominus$und $HSO_4^\ominus$ enthalten.

Anstelle des unsubstituierten Pyrrols können auch N-Alkyl-sowie N-Arylpyrrole, jeweils auch ringsubstituiert, durch anodische Oxidation zu elektrisch leitfähigen Polymeren umgesetzt werden (A.F. Diaz et al. Synth. Met. 1981, 4, 115; DE 3 223 544 A1; EP 0 055 358; E.M. Genies et al., Synth. Met. 1984/85, 10 , 21).

Alle diese Pyrrole und Polypyrrole enthalten "elektronenschiebende" N-Substituenten.

Es wurde nun gefunden, daß N-Acyl-pyrrole, d.h. Pyrrole mit "elektronenziehenden" N-Substituenten, trotz der deutlich verminderten Basizität bzw. Elektronendichte des Pyrrolrings in Gegenwart von geeigneten Leitsalzen durch anodische Polymerisation filmförmige Poly-N-acyl-pyrrole mit guter Leitfähigkeit liefern. Diese Poly-N-acyl-pyrrole zeichnen sich gegenüber den bisher bekannten Polypyrrolen durch eine bei ALterung erhöhte Stabilität und einen geringeren Nachlaß der Leitfähigkeit aus.

Diese verbesserten Leitfähigkeitseigenschaften sind überraschend, da zu erwarten war, daß die elektronenärmeren Poly-N-acylpyrrole eine deutlich schlechtere Leitfähigkeit aufweisen würden als die elektronenreicheren Poly-N-alkyl-oder N-aryl-pyrrole.

Außerdem war zu erwarten, daß die höheren Potentiale, die für die anodischen Oxidation von N-Acyl-Pyrrolen erforderlich sind, verglichen mit den für die Oxydation von Pyrrol oder N-Alkyl-pyrrolen erforderlichen Oxydationspotentialen, zur Oxidation bzw. Öffnung des Pyrrol-Ringes führen. Erstaunlicherweise lassen sich jedoch auch N-Acyl-pyrrole trotz des relativ hohen Oxidationspotentials anodisch in hohen Ausbeuten zu leitfähigen Polymeren oxidieren.

Die Erfindung betrifft daher elektrisch leitfähige Poly-N-acyl-pyrrole. Die Erfindung betrifft ferner ein Verfahren zur Herstellung dieser elektrisch leitfähigen Poly-N-acylpyrrole; das Verfahren ist dadurch gekennzeichnet, daß man N-Acyl-pyrrole der Formel I

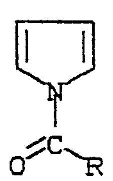

I

worin R Wasserstoff, einen $C_1$-$C_8$-Alkyl-, einen $C_1$-$C_8$-Hydroxyalkyl-oder einen gegebenenfalls substituierten, vorzugsweise einkernigen, aromatischen Rest darstellt, in Anwesenheit eines Alkali-oder Tetraalkylammoniumsalzes mit einem schwer oxidierbaren Anion (Leitsalz) bei einem Potential von +1.4 V bis +3.0 V elektrochemisch oxydierend polymerisiert. Die Obergrenze des Potentials kann durch das Oxidationspotential des eingesetzten Lösungsmittels bestimmt sein.

Bei den erfindungsgemäßen elektrisch leitfähigen Poly-N-acyl-pyrrolen handelt es sich um Komplexe aus Poly-N-acyl-pyrrol-Kationen und oxydationsstabilen Anionen. In diesen Komplexen entfallen in etwa auf 4 N-Acyl-pyrrol-Einheiten 1 positive Ladung und ein Anion.

Die Monomerkonzentration bei der elektrochemischen Oxydation der Polymeren ist bevorzugt 0,001-2 mol/1, vorzugsweise 0,05-0,1 mol/1, kann aber auch unter-oder überschritten werden.

Im Gegensatz zu den bekannten elektrochemischen Synthesen von Polypyrrol und Polypyrrol-Derivaten arbeitet man bei der Polymerisation von N-Acylpyrrolen bei Potentialen über +1.4 V vs. SCE.

Als Leitsalze können an sich bekannte Alkalioder Tetraalkylammonium-Salze mit schwer oxidierbarem Anion wie z.B. $BF_4^{\ominus}$, $PF_6^{\ominus}$, $AsF_6^{\ominus}$, etc. eingesetzt werden.

Geeignete Lösungsmittel sind polare organische Solventien, die Pyrrol und Leitsalz lösen. Bevorzugt sind Acetonitril, Dioxan und N-Methylpyrrolidon.

Es kann jedoch auch in geeigneten anorganischen Lösungsmitteln wie z.B. Wasser gearbeitet werden.

Die Elektrolyse wird vorzugsweise unter Inertgas bei Raumtemperatur durchgeführt. Höhere oder niedrigere Temperaturen sind auch möglich, begrenzend sind dann allein die physikalischen Eigenschaften des Lösungsmittels.

Das N-Acylpyrrol kann auch in an sich bekannter Weise in eine Polymermatrix (z.B. PVC) hinein polymerisiert werden.

Als Monomere werden bevorzugt N-Acyl-pyrrole der Formel I eingesetzt, in der

R für H, $CH_3$, $C_2H_5$, n-$C_3H_7$, i-$C_3H_7$, n-$C_4H_9$, i-$C_4H_9$, -$CH_2OH$, -$CH_2CH_2OH$, -$CHOHCH_3$, $C_6H_5$ steht.

Die bei der elektrochemischen Oxydation erhaltenen Poly-N-acyl-pyrrole scheiden sich an der Anode in Form eines Films ab. Dieser wird zum Entfernen von anhaftendem Leitsalz mit Lösungsmitteln gewaschen und bei Temperaturen von 50-80° C im Vakuum getrocknet. Anschließend können die Filme in an sich bekannter Weise weiterverarbeitet werden.

Die erfindungsgemäßen Poly-N-acyl-pyrrole können zur Herstellung von Elektroden, Katalysatoren, Batterien, Schaltern, Halbleiter-Bauteilen, Solarzellen und zur antistatischen Ausrüstung von Kunststoffen verwendet werden.

Beispiel 1

In einem Glasgefäß werden 350 ml Acetonitril, 1 ml Wasser, 1,66 g N-Formylpyrrol sowie 7,6 g Tetraethylammoniumtetrafluoroborat vorgelegt. Man bringt zwei Platin-Elektroden von je 24 $cm^2$ Fläche ein und elektrolysiert 30 Minuten bei potentiostatischem Aufbau bei +1,5 V vs. SCE. Der schwarze Film auf der Anode läßt sich nach Spülen mit Acetonitril und Trocknen im Vakuum von der Elektrode lösen.

Filmdicke: 10 µm

Leitfähigkeit: $1,2 \times 10^{-1} \Omega^{-1} cm^{-1}$

Beispiel 2

Verfahrensweise wie in Beispiel 1, nur wurden 1,8 g N-Acetyl-pyrrol eingesetzt.

Filmdicke: 8 µm

Leitfähigkeit: $3,5 \bullet 10^{-2} \Omega^{-1} cm^{-1}$

**Ansprüche**

1. Elektrisch leitfähige Poly-N-acyl-pyrrole.

2. Verfahren zur Herstellung von elektrisch leitfähigen Poly-N-Acyl-pyrrolen, dadurch gekennzeichnet, daß man N-Acyl-pyrrole der Formel

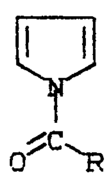

worin R einen $C_1$-$C_8$-Alkyl-, einen $C_1$-$C_8$-Hydroxyalkyl-oder einen gegebenenfalls substituierten aromatischen Rest darstellt, in Anwesenheit eines Alkali-oder Tetraalkylammoniumsalzes und einem schwer oxidierbarem Anion (Leitsalz) bei einem Potential von +1.4 V bis +3.0 V elektrochemisch oxydierend polymerisiert.

Europäisches Patentamt

# EUROPÄISCHER RECHERCHENBERICHT

Nummer der Anmeldung: EP 86112753.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | MOLECULAR CRYSTALS AND LIQUID CRYSTALS MCLCA5, Vol. 118, Nr. 1-4, 1985<br>R.L.ELSENBAUMER et al. "Proceedings of the International Conference on the Physics and Chemistry of Low-dimensional Synthetic Metals (ICSM 84), Part B, Conducting Polymers II, Abano Terme (Italien), 17.-22. Juni 1984<br>Seiten 111-116<br>* Seite 112, Tabelle I, vorletztes Beispiel * | 1,2 | H 01 B 1/12 |
| A | EXTENDED ABSTRACTS, Vol. 82-1,Nr. 617 9.-14. Mai 1982, Montreal (Canada)<br>Seite 993<br>* Abstract-Nr. 617 * | 2 | |
| X | EP - A1 - 0 105 768 (COMMISSARIAT)<br>* Seite 8, Zeilen 12-35 * | 1,2 | |

RECHERCHIERTE SACHGEBIETE (Int. Cl.4)

H 01 B 1/00
C 08 F 34/00
C 25 B 3/00

Der vorliegende Recherchenbericht wurde für alle Patentansprüche erstellt.

| Recherchenort | Abschlußdatum der Recherche | Prüfer |
|---|---|---|
| WIEN | 10-12-1986 | KUTZELNIGG |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82